# EUROPÄISCHE PATENTSCHRIFT

(11) **EP 0 995 644 B1**
(45) Veröffentlichungstag und Bekanntmachung des Hinweises auf die Patenterteilung: **17.12.2003**
(21) Anmeldenummer: 99120015.5
(22) Anmeldetag: 15.10.1999
(51) Int. Cl.: B60R 21/26

(54) **Gasgenerator sowie Verfahren zu dessen Herstellung**
Gas generator and method of producing the same
Générateur de gaz et sa méthode de fabrication

(30) Priorität: 23.10.1998 DE 29818957 U
(43) Veröffentlichungstag der Anmeldung: 26.04.2000
(73) Patentinhaber: TRW Airbag Systems GmbH, 84544 Aschau am Inn (DE)
(72) Erfinder: Prokopec, Norbert, 84579 Unterneukirchen (DE); Reiter, Christian, 84544 Aschau/Inn (DE); Wimmer, Robert, 84503 Altötting (DE)
(74) Vertreter: Sulzbach, Werner, Dipl.-Chem. Dr.

(56) Entgegenhaltungen:
- EP-A- 0 589 152
- US-A- 5 224 734
- US-A- 5 772 242
- US-A- 5 806 887

## Beschreibung

Die Erfindung betrifft einen Gasgenerator für eine Sicherheitseinrichtung in Kraftfahrzeugen, insbesondere zur Verwendung in einem Fahrzeuginsassen-Rückhaltesystem.

Gasgeneratoren für Sicherheitseinrichtungen umfassen im allgemeinen ein Gehäuse, eine in das Gehäuse eingebrachte Brennkammer mit Festtreibstoff zur Erzeugung von Heißgas sowie eine Einrichtung zum Filtern und Kühlen der aus dem Festtreibstoff freigesetzten Heißgase. Der Festtreibstoff wird durch eine in das Gehäuse bzw. einen Gehäusedeckel eingesetzte Anzündeinheit gezündet und über Abströmöffnungen im Gehäuse beispielsweise dem Luftsack der Sicherheitseinrichtung zugeführt.

Bekannt ist, zur Verhinderung von Rasselgeräuschen und zum Ausgleich. von Änderungen des Volumens der Treibstoffüllung elastische Füllkörper in die Brennkammer einzubringen. Diese Füllkörper können aus Drahtgeflecht, Drahtgewebe, Streckmetall, Klemmblechen, Mineralfasern oder Keramikfasern oder auch aus gestanztem Silikonschaum gebildet sein. Die Verwendung dieser bekannten Füllkörper ist jedoch mit verschiedenen Nachteilen verbunden.

Bei Füllkörpern aus Drahtgeflecht, Drahtgewebe, Klemmblech oder Streckmetall wirkt das verwendete metallische Material als Kühlkörper und beeinflußt so das Abbrandverhalten des Festtreibstoffs. Zum Einbringen dieser Füllkörper in das Gasgeneratorgehäuse werden komplizierte Vorrichtungen benötigt. Bei einer Änderung der Abmessungen des Gasgeneratorgehäuses sind zudem neue Bauteile erforderlich. Die Fixierung des Treibstoffs bzw. eines Treibstoffbehälters im Gasgeneratorgehäuse erfolgt durch Federkraft und somit durch eine meist punktförmige Belastung des Treibstoffs oder eines Treibstoffbehälters. Hierdurch besteht die Gefahr von Beschädigungen des Treibstoffgranulats und/oder des Treibstoffbehälters. Bei Zusammenbau des Gasgenerators durch Verschrauben des Gehäuses mit einem Deckel kann sich der Füllkörper verdrehen und so eine der Verschraubung entgegenwirkende Kraft erzeugen. Schließlich erhöhen scharfe Bauteilkanten am Füllkörper zusätzlich die Gefahr der Beschädigung von Gewinden oder sonstigen Bauteilen im Gasgeneratorgehäuse.

Füllkörper aus Mineral- oder Keramikfasern besitzen eine nur geringe Elastizität, Kompressibilität und Rückstellkraft und gewährleisten somit keine ausreichende Fixierung des Treibstoffs bzw. des Treibstoffbehälters gegen ein Verrutschen. Die ebenfalls verwendeten Füllkörper aus gestanztem Silikonschaum weisen relativ hohe Materialkosten auf und müssen ebenfalls aufwendig an veränderte Gasgeneratorabmessungen angepaßt werden.

Aus der EP-A- 0 589 152 ist ein Gasgenerator nach dem Oberbegriff des Anspruchs 1 bzw. des Anspruchs 6 bekannt.

Aufgabe der Erfindung ist es, die vorgenannten Nachteile zu vermeiden und einen Gasgenerator bereitzustellen, bei dem auf einfache und kostengünstige Weise das Auftreten von Rasselgeräuschen verhindert wird.

Diese Aufgabe wird erfindungsgemäß gelöst durch einen Gasgenerator mit den Merkmalen des Anspruchs 1 bzw. ein Verfahren mit den Merkmalen des Anspruchs 6.

Gemäß einer besonderen Ausführungsform der Erfindung ist der Füllkörper aus einer Dichtmasse auf Silikonbasis gebildet. Diese Dichtmasse wird vorzugsweise vor dem Zusammenbau von Gehäuse, Treibstoffbehälter und Deckel in pastöser Form auf den Deckel aufgebracht und härtet nach dem Zusammenbau des Gasgenerators zumindest teilweise aus. Die dadurch erreichte Verbindung zwischen Deckel und/oder Gehäuse einerseits und Treibstoffbehälter andererseits verhindert ein Verrutschen des Treibstoffbehälters sowie das Auftreten von Rasselgeräuschen.

Eine weitere besondere Ausführungsform der Erfindung zeichnet sich dadurch aus, daß der Treibstoffbehälter eine Falz- oder Schweißnaht aufweist und der Füllkörper den Treibstoffbehälter im Bereich der Falz- oder Schweißnaht mit dem Deckel verbindet. Hierdurch wird ohne zusätzliche Maßnahmen die Dichtigkeit des Treibstoffbehälters erhöht. Es entfallen die bei hygroskopischen Treibstoffen üblichen hohen Anforderungen an die Dichtigkeit der Falz- oder Schweißnaht. Darüber hinaus kann die Dichtmasse auch so aufgetragen werden, daß sie sich zusätzlich im Gewindebereich des Deckels bzw. des Gehäuses verteilt.

Zur Herstellung des erfindungsgemäßen Gasgenerators wird der Füllkörper in Form einer pastösen viskosen Masse, beispielsweise einer Dichtmasse auf Silikonbasis, wie sie unter dem Handelsnamen Loctite von der Firma Loctite Deutschland GmbH erhältlich ist, in Form einer Raupe auf den Deckel und/oder den in das Gehäuse eingesetzten Treibstoffbehälter aufgespritzt. Nach dem Zusammenfügen von Gehäuse und Deckel härtet die Dichtmasse vorzugsweise anaerob aus, um ein ungewolltes Aushärten bei Produktionsstillständen zu vermeiden. Es wurde gefunden, daß die durch die Dichtmasse erzielte Haftwirkung auch bei teilweiser Aushärtung zufriedenstellend ist, beispielsweise einer Aushärtung in den an die Fügestellen zwischen Deckel und Gehäuse angrenzenden Bereichen der Dichtmasse. Während des Zusammenfügens von Gehäuse und Deckel, beispielsweise durch Verschrauben, verteilt sich die Dichtmasse gleichmäßig auf dem Bauteil, wobei überschüssiges Material in Hohlräume abgedrängt wird.

In vorteilhafter Weise ist daher beim Verschrauben ein nur geringer und gleichmäßiger Widerstand zu überwinden. Ebenso besteht im Gegensatz zu den aus dem Stand der Technik bekannten Füllkörpern nicht die Gefahr des Verkantens oder der Beschädigung von Gewinden im Gehäuse. Auch die Gefahr von Beschädigungen des Treibstoffbehälters ist wesentlich herabgesetzt, da der pastöse Füllkörper als Schmierfilm zwischen den Bauteilen wirkt.

Der wenigstens teilweise ausgehärtete Füllkörper verbindet den Treibstoffbehälter elastisch mit dem Deckel bzw. mit dem Gehäuse und stellt somit eine sichere Fixierung gegen Verrutschen dar. Damit werden Rasselgeräusche in sicherer Weise unterdrückt. Durch die Dauerelastizität der Dichtmasse ist der Treibstoffbehälter sicher eingebettet und gegen Vibrationen geschützt. Bei Änderungen der Gehäuseabmessungen läßt sich durch eine veränderte Einstellung von Pumpen und Dosierventilen in einfacher Weise eine Anpassung der Dichtmassenmenge erreichen. Somit sind keine aufwendigen Änderungen des Produktionsprozesses nötig. Schließlich ist der erfindungsgemäße Füllkörper auch zu wesentlich geringeren Kosten herstellbar.

Weitere Merkmale der Erfindung ergeben sich aus der folgenden Beschreibung bevorzugter Ausführungsformen und aus der Zeichnung, auf die Bezug genommen wird. In der Zeichnung zeigen:
Figur 1 eine schematische Darstellung des erfindungsgemäßen Gasgenerators; und
Figur 2 die Darstellung eines Gehäusedeckels mit erfindungsgemäß aufgebrachtem Füllkörper.

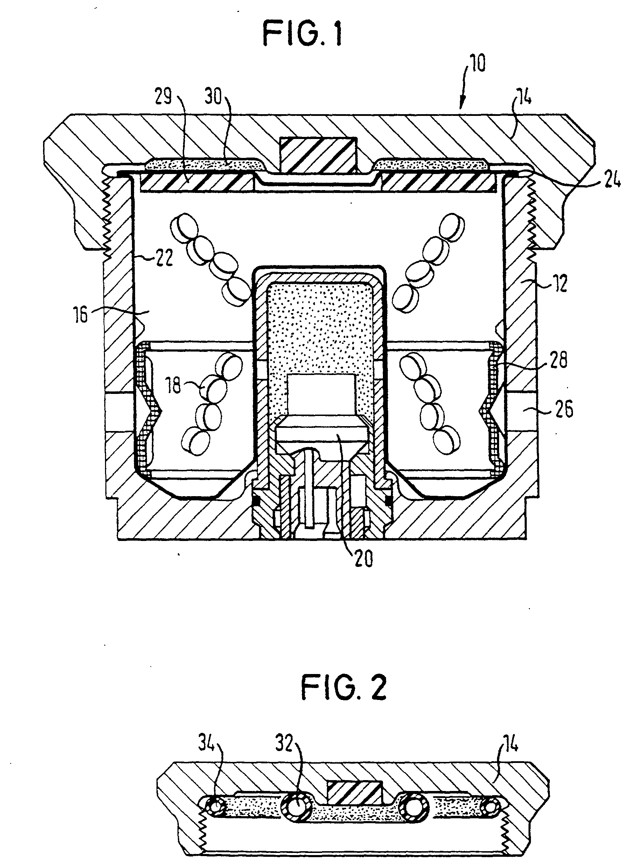

Figur 1 zeigt die Darstellung eines erfindungsgemäßen Gasgenerators 10. Der Gasgenerator weist ein Gehäuse 12 und einen mit dem Gehäuse verschraubten Deckel 14 auf. In dem Gehäuse 12 ist eine Brennkammer 16 mit Festtreibstoff 18 ausgebildet, in die eine Anzündeinheit 20 hineinragt. Der Festtreibstoff 18 ist in einen Treibstoffbehälter 22 eingefüllt, der den Treibstoff luft- und gasdicht umschließt. Die in dem Treibstoffbehälter 22 vorgesehene Schweiß- oder Falznaht 24 ist vorzugsweise in einem dem Gehäusedeckel 14 gegenüberliegenden Bereich des Treibstoffbehälters 22 angeordnet. Der Treibstoffbehälter 22 ist vorzugsweise aus einem Metallblech oder einer Metallfolie, beispielsweise aus Aluminium oder Kupfer, gebildet und kann nach dem Einfüllen des Treibstoffs 18 wenigstens teilweise evakuiert werden.

Das Gehäuse weist ferner Abströmöffnungen 26 auf, durch die das aus dem Treibstoff 18 im Falle der Auslösung des Gasgenerators 10 freigesetzte Heißgas dem Luftsack (hier nicht gezeigt) einer Sicherheitseinrichtung zugeführt wird. Vor den Abströmöffnungen 26 sind Filter 28 angeordnet. Ferner sind im Treibstoffbehälter elastische Volumenausgleichsmittel 29 vorgesehen, die in bekannter Weise Schwankungen der in den Behälter 22 eingefüllten Treibstoffmenge ausgleichen.

Zwischen dem Treibstoffbehälter 22 und dem Deckel 14 ist ein Füllkörper 30 aus einem elastischen Material, vorzugsweise einer Dichtmasse auf Silikonbasis, eingebracht. Der elastische Füllkörper haftet an dem Treibstoffbehälter 22 und dem Deckel 14 sowie, gegebenenfalls, an Teilen des Gasgeneratorgehäuses 12. Dadurch wird der Treibstoffbehälter 22 fest und elastisch im Gehäuse 12 fixiert und so das Auftreten von Rasselgeräuschen verhindert.

Figur 2 zeigt eine schematische Darstellung des Gehäusedeckels 14 vor dem Zusammenfügen von Deckel 14 und Gehäuse 12. Der Füllkörper ist vorzugsweise in Form einer Raupe 32 als pastöse viskose Masse auf den Deckel aufgetragen. Besonders bevorzugt kann eine zweite Füllkörperraupe 34 im Umfangsbereich des Deckels 14 aufgetragen sein, die nach dem Zusammenfügen von Deckel 14 und Gehäuse 12 des Gasgenerators 10 den Treibstoffbehälter 22 im Bereich der Schweißnaht 24 mit dem Deckel 14 verbindet und sich gegebenenfalls auch im Gewindebereich verteilt. Hierdurch wird eine zusätzliche Abdichtung der Schweißnaht gewährleistet, so daß die Anforderungen an die Dichtigkeit bei der Ausführung der Schweißnaht herabgesetzt werden können. Natürlich kann die erste Dichtmassenraupe 32 auch vollständig durch die zweite Dichtmassenraupe 34 ersetzt werden.

Der erfindungsgemäße Gasgenerator ist kostengünstig herstellbar und gewährleistet eine schnelle und sichere Anpassung an veränderte Gehäuseabmessungen. Durch Vibrationen des Treibstoffbehälters auftretende Rasselgeräusche werden über die sichere und elastische Fixierung des Treibstoffbehälters an dem Gehäusedeckel und, gegebenenfalls, an Teilen des Gehäuses 12 verhindert. Die Gefahr von Beschädigungen des Treibstoffkanisters ist durch die viskose Konsistenz der Dichtmasse beim Zusammenbau des Gasgenerators nahezu ausgeschlossen. Dies ermöglicht somit auch die Verwendung dünnerer Metallfolien für den Treibstoffbehälter und führt somit zu weiteren Materialeinsparungen und damit zu geringeren Kosten. Schließlich ist der Kraftaufwand bei der Verschraubung des Deckels mit dem Gehäuse geringer.

## Patentansprüche

1. Gasgenerator (10) für eine Sicherheitseinrichtung in Kraftfahrzeugen, mit einem Gehäuse (12), einen das Gehäuse verschließenden Deckel (14) und einem in dem Gehäuse angeordneten Treibstoffbehälter (22), wobei zwischen dem Treibstoffbehälter (22) und dem Deckel (14) oder dem Gehäuse (12) ein Füllkörper (30) aus einem elastischen Material angeordnet ist, **dadurch gekennzeichnet, daß** der Füllkörper (30) an dem Treibstoffbehälter (22) und dem Deckel (14) und/oder dem Gehäuse haftet und dadurch miteinander verbindet.

2. Gasgenerator nach Anspruch 1, **dadurch gekennzeichnet, daß** der Füllkörper (30) aus einer Dichtmasse auf Silikonbasis gebildet ist.

3. Gasgenerator nach Anspruch 1 oder 2, **dadurch gekennzeichnet, daß** der Füllkörper (30) vor dem Zusammenbau von Gehäuse (12), Treibstoffbehälter (22) und Deckel (14) in pastöser Form auf den Deckel aufgebracht ist und nach dem Zusammenbau ganz oder teilweise aushärtet.

4. Gasgenerator nach einem der vorhergehenden Ansprüche, **dadurch gekennzeichnet, daß** der Treibstoffbehälter (22) eine Falz- oder Schweißnaht (24) aufweist und der Füllkörper (30) den Treibstoffbehälter (22) im Bereich der Falz- oder Schweißnaht (24) mit dem Deckel (14) verbindet.

5. Gasgenerator nach einem der vorhergehenden Ansprüche, **dadurch gekennzeichnet, daß** der Füllkörper (30) den Treibstoffbehälter (22) mit dem Deckel (14) verbindet.

6. Verfahren zur Herstellung eines Gasgenerators (10) für eine Sicherheitseinrichtung in Kraftfahrzeugen, mit einem Gehäuse (12), einem das Gehäuse verschließenden Deckel (14) und einem in dem Gehäuse angeordneten Treibstoffbehälter (22), **gekennzeichnet durch** die folgenden Schritte:
- Aufbringen einer pastösen viskosen Masse auf den Deckel (14); und
- Verschrauben des Deckels (14) mit dem Gehäuse (12), wobei **durch** die Masse eine Haftverbindung zwischen Deckel (14) und/oder Gehäuse (12) einer seits und Treibstoffbehälter (22) anderer seits hergestellt wird.

7. Verfahren nach Anspruch 6, **dadurch gekennzeichnet, daß** die pastöse viskose Masse eine Dichtmasse auf Silikonbasis ist.

8. Verfahren nach Anspruch 7, **dadurch gekennzeichnet, daß** die Dichtmasse anaerob gehärtet wird.

9. Verfahren nach einem der Ansprüche 6 bis 8, **dadurch gekennzeichnet, daß** die pastöse viskose Masse im Umfangsbereich des Deckels (14) aufgetragen wird.

## Claims

1. A gas generator (10) for a safety device in motor vehicles, comprising a housing (12), a cover (14) closing the housing, and a propellant container (22) arranged in the housing, a filling body (30) made of an elastic material being arranged between the propellant container (22) and the cover (14) or the housing (12), **characterized in that** the filling body (30) adheres to the propellant container (22) and the cover (14) and/or the housing and thereby connects them with each other.

2. The gas generator according to Claim 1, **characterized in that** the filling body (30) is formed from a silicone-based sealing compound.

3. The gas generator according to Claim 1 or 2, **characterized in that** the filling body (30) is applied in pasty form onto the cover before the assembly of the housing (12), the propellant container (22) and the cover (14), and partially or totally hardens after assembly.

4. The gas generator according to any of the preceding claims, **characterized in that** the propellant container (22) has a folded or weld seam (24) and the filling body (30) connects the propellant container (22) with the cover (14) in the region of the folded or weld seam (24).

5. The gas generator according to any of the preceding claims, **characterized in that** the filling body (30) connects the propellant container (22) with the cover (14).

6. A method of manufacturing a gas generator (10) for a safety device in motor vehicles, comprising a housing (12), a cover (14) closing the housing, and a propellant container (22) arranged in the housing, **characterized by** the following steps:
- applying a pasty, viscous compound onto the cover (14); and
- screwing tight the cover (14) with the housing (12),
the compound establishing an adhesive joint between the cover (14) and/or the housing (12) on the one hand and the propellant container (22) on the other hand.

7. The method according to Claim 6, **characterized in that** the pasty, viscous compound is a silicone-based sealing compound.

8. The method according to Claim 7, **characterized in that** the sealing compound is hardened anaerobically.

9. The method according to any of claims 6 to 8, **characterized in that** the pasty, viscous compound is applied in the peripheral region of the cover (14).

## Revendications

1. Générateur de gaz (10) pour un dispositif de sécurité dans des véhicules, comportant un boîtier (12), un couvercle (14) fermant le boîtier et un réservoir de combustible (22) agencé dans le boîtier, un corps de remplissage (30) en matériau élastique étant agencé entre le réservoir de combustible (22) et le couvercle (14) ou le boîtier (12), **caractérisé en ce que** le corps de remplissage (30) adhère au réservoir de combustible (22) et au couvercle (14) et/ou boîtier et les relie ainsi l'un à l'autre.

2. Générateur de gaz selon la revendication 1, **caractérisé en ce que** le corps de remplissage (30) est formé par une masse d'étanchéité à base de silicone.

3. Générateur de gaz selon la revendication 1 ou 2, **caractérisé en ce que** le corps de remplissage (30) est appliqué sous forme pâteuse sur le couvercle avant l'assemblage du boîtier (12), du réservoir de combustible (22) et du couvercle (14) et durcit entièrement ou partiellement après l'assemblage.

4. Générateur de gaz selon l'une des revendications précédentes, **caractérisé en ce que** le réservoir de combustible (22) présente une couture de pliage ou de soudure (24), et le corps de remplissage (30) relie le réservoir de combustible (22) au couvercle (14) dans la région de la couture de pliage ou de soudure (24.

5. Générateur de gaz selon l'une des revendications précédentes, **caractérisé en ce que** le corps de remplissage (30) relie le réservoir de combustible (22) au couvercle.

6. Procédé de fabrication d'un générateur de gaz (10) pour un dispositif de sécurité dans des véhicules, comportant un boîtier (12), un couvercle (14) fermant le boîtier et un réservoir de combustible (22) agencé dans le boîtier, **caractérisé par** les étapes suivantes :
- application d'une masse visqueuse pâteuse sur le couvercle (14) ; et
- vissage du couvercle (14) sur le boîtier (12), une liaison par adhérence étant réalisée par la masse entre le couvercle (14) et/ou le boîtier (12) d'une part, et le réservoir de combustible (22) d'autre part.

7. Procédé selon la revendication 6, **caractérisé en ce que** la masse visqueuse pâteuse est une masse d'étanchéité à base de silicone.

8. Procédé selon la revendication 7, **caractérisé en ce que** la masse d'étanchéité est durcie par anaérobie.

9. Procédé selon l'une des revendications 6 à 8, **caractérisé en ce que** la masse visqueuse pâteuse est appliquée dans la région périphérique du couvercle (14).
